(19) **Europäisches Patentamt / European Patent Office / Office européen des brevets**

(11) **EP 3 786 193 A1**

(12) # EUROPEAN PATENT APPLICATION
published in accordance with Art. 153(4) EPC

(43) Date of publication:
**03.03.2021 Bulletin 2021/09**

(21) Application number: **18916382.7**

(22) Date of filing: **06.12.2018**

(51) Int Cl.:
**C08F 14/22** (2006.01)     **C08L 27/16** (2006.01)
**C08L 33/02** (2006.01)

(86) International application number:
**PCT/JP2018/044847**

(87) International publication number:
**WO 2019/207833 (31.10.2019 Gazette 2019/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.04.2018   JP 2018085827**

(71) Applicant: **Kureha Corporation**
**Chuo-ku**
**Tokyo 103-8552 (JP)**

(72) Inventors:
- **MIYASHITA, Tatsuaki**
  **Tokyo 103-8552 (JP)**
- **ITO, Yuka**
  **Tokyo 103-8552 (JP)**

(74) Representative: **Zimmermann & Partner**
**Patentanwälte mbB**
**Postfach 330 920**
**80069 München (DE)**

(54)     **PARTICLES**

(57)     To achieve particles of a vinylidene fluoride polymer, which can be efficiently dehydrated and to which a filler component can be efficiently filled. The particles according to an embodiment of the present invention are particles of a vinylidene fluoride polymer. The bulk density of the particles is from 0.30 to 0.44 g/mL. Furthermore, for the particles, the pore size that makes the cumulative pore volume measured by a mercury porosimeter 0.5 mL/g is from 50 to 400 nm.

EP 3 786 193 A1

**Description**

**TECHNICAL FIELD**

The present invention relates to particles of a vinylidene fluoride polymer.

**BACKGROUND ART**

Vinylidene fluoride polymers typically have excellent chemical resistance, weather resistance, and contamination resistance and have been utilized in various uses, such as various films, molding raw materials, coatings, and binders.

For example, a composition containing an unsaturated carboxylic acid polymer, such as polyacrylic acid, and a carboxyl group-containing vinylidene fluoride polymer has been known as a binder for a non-aqueous electrolyte secondary battery having high adhesion (e.g., see, Patent Document 1). Furthermore, vinylidene fluoride polymer particles having a specific porous structure are known as a binder for an electrode of a non-aqueous electrolyte battery, the binder having excellent solubility in an organic solvent (e.g., see,

Patent Document 2).

**CITATION LIST**

Patent Document

> Patent Document 1: WO 2011/122261
> Patent Document 2: WO 2009/047969

**SUMMARY OF INVENTION**

Technical Problem

However, the polyacrylic acid in the composition described in Patent Document 1 requires adequate water removal to use the polyacrylic acid as a raw material for the composition. However, water distillation from the polyacrylic acid and drying require a large amount of energy. Furthermore, operation such as pulverization after drying is required. Therefore, use of the polyacrylic acid in the composition tends to have many steps and make operation complicated.

If a polyacrylic acid aqueous solution is used as is and can be combined with a vinylidene fluoride polymer, it is expected that a great merit can be achieved from the perspective of energy. Patent Document 2 does not describe that a water-soluble polymer is contained in a porous structure of a vinylidene fluoride polymer particle, and also does not describe that a water content is controlled for efficient drying. As described above, technologies for efficiently dehydrating vinylidene fluoride polymer particles and efficiently filling a filler component into the particles still have room of examination.

An aspect of the present invention is to achieve particles of a vinylidene fluoride polymer, which can be efficiently dehydrated and in which a filler component can be efficiently filled.

**SOLUTION TO PROBLEM**

The particle according to one aspect of the present invention to solve the problem described above is a particle of a vinylidene fluoride polymer, the particle having a bulk density from 0.30 to 0.44 g/mL, and a pore size that makes a cumulative pore volume measured by a mercury porosimeter 0.5 mL/g from 50 to 400 nm.

**ADVANTAGEOUS EFFECTS OF INVENTION**

According to an aspect of the present invention, particles of a vinylidene fluoride polymer, which can be efficiently dehydrated and to which a filler component can be efficiently filled, can be achieved.

**BRIEF DESCRIPTION OF THE DRAWINGS**

FIG. 1 is a diagram showing the pore size and the volume of the vinylidene fluoride polymer particles of Examples and Comparative Examples according to embodiments of the present invention.

FIG. 2 is a diagram showing the cumulative pore volume of the vinylidene fluoride polymer particles of Examples and Comparative Examples according to embodiments of the present invention.

## DESCRIPTION OF EMBODIMENTS

Hereinafter, embodiments of the present invention will be described in detail. The particles according to an embodiment of the present invention are particles of a vinylidene fluoride polymer (hereinafter, also referred to as "PVDF-based resin particles").

Vinylidene fluoride polymer

The vinylidene fluoride polymer is a polymer compound having a structure obtained by polymerizing a vinylidene fluoride-containing monomer. The vinylidene fluoride polymer may be of one type or more. Furthermore, the vinylidene fluoride polymer may be a homopolymer of vinylidene fluoride (polyvinylidene fluoride) or may be a copolymer of vinylidene fluoride and another monomer (vinylidene fluoride copolymer). From the perspective of ease in controlling the porous structure of the PVDF-based resin particles to be an expected structure, the vinylidene fluoride polymer is preferably a vinylidene fluoride copolymer.

Other monomers may be of one type or more. Examples of such other monomers include halogen-containing monomers, ethylene, unsaturated dibasic acid derivatives, carboxyl group-containing acrylate compounds, 2-hydroxyethyl acrylate, and hydroxypropyl acrylate.

Examples of the halogen-containing monomer include vinyl fluoride, trifluoroethylene, tetrafluoroethylene, chlorotrifluoroethylene, hexafluoropropylene, and perfluoroalkyl vinyl ethers.

Examples of the unsaturated dibasic acid derivative include alkyl (meth)acrylate compounds, such as monomethyl maleate, dimethyl maleate, vinyl acetate, (meth)acrylamide, dimethyl (meth)acrylamide, allyl glycidyl ether, and methyl (meth)acrylate.

Examples of the carboxyl group-containing acrylate compound include (meth)acrylate, 2-carboxyethyl acrylate, (meth)acryloyloxypropylsuccinic acid, and (meth)acryloyloxyethylsuccinic acid.

Other monomers is preferably one or more compounds selected from the group consisting of hexafluoropropylene and monomethyl maleate from the perspective of allowing the vinylidene fluoride polymer to exhibit suitable adhesion as a binder for an electrode.

The proportion of a structural unit derived from vinylidene fluoride in the vinylidene fluoride polymer (proportion of vinylidene fluoride in all monomers constituting the polymer) has only to be an amount by which a structural unit derived from vinylidene fluoride becomes a main component, and may be, for example, 50 mass% or greater. The proportion can be appropriately selected in a range from 50 mass% to 100 mass% depending on the expected physical properties of the vinylidene fluoride polymer. The proportion of a structural unit derived from another monomer in the vinylidene fluoride polymer can be also appropriately selected in a range of less than 50 mass% depending on the expected physical properties of the vinylidene fluoride polymer.

The inherent viscosity of the vinylidene fluoride polymer is typically correlated with the degree of polymerization. For example, from the perspective of adequately exhibiting chemical stability and mechanical strength of the PVDF-based resin particles, the inherent viscosity is preferably 0.5 dL/g or greater, and particularly more preferably from 0.8 to 4.0 dL/g. The inherent viscosity of the vinylidene fluoride polymer can be determined as a logarithmic viscosity at 30°C of a solution in which 4 g of the vinylidene fluoride polymer is dissolved in 1 L of N,N-dimethylformamide, and can be adjusted by a known method.

Physical properties of PVDF-based resin particles

The bulk density of the PVDF-based resin particles is from 0.30 to 0.44 g/mL. When the bulk density is too low, for example, the water content becomes high, and drying of the PVDF-based resin particles may require a larger amount of energy. When the bulk density is too high, for example, in the case where a filler component is contained in the porous structure of the PVDF-based resin particles, the content of the filler component may be insufficient. From the perspective of enhancing efficiency in drying of the PVDF-based resin particles, the bulk density is preferably 0.30 g/mL or greater, more preferably 0.32 g/mL or greater, and even more preferably 0.33 g/mL or greater. Furthermore, from the perspective of allowing an adequate amount of the filler component to be contained in the PVDF-based resin particles, the bulk density is preferably 0.44 g/mL or less, more preferably 0.4 g/mL or less, and even more preferably 0.38 g/mL or less.

The bulk density of the PVDF-based resin particles can be determined based on the measurement method of "Bulk specific gravity" described in JIS K6721-3.3. Furthermore, the bulk density of the PVDF-based resin particles can be adjusted by, for example, a polymerization temperature or a monomer density.

The pore size that makes the cumulative pore volume 0.5 mL/g in a measurement range from 3 to 1000 nm of the PVDF-based resin particles is from 50 to 400 nm. The cumulative pore volume is measured in a measurement range of 3 to 1000 nm from a side of greater pore size using a mercury porosimeter. When the pore size is too small, for example, in the case where a filler component is a bulky component, the amount contained in the PVDF-based resin particles results in small. When the pore size is too large, the water content results in high, and drying efficiency is reduced. From the perspective of allowing an adequate amount of the filler component in an aqueous solution to be contained in the PVDF-based resin particles, the pore size is preferably 50 nm or greater, more preferably 80 nm or greater, and even more preferably 100 nm or greater. Furthermore, from the perspective of achieving an adequately low water content of the PVDF-based resin particles, the pore size is preferably 400 nm or less, more preferably 350 nm or less, and even more preferably 300 nm or less. The pore size can be adjusted by, for example, a polymerization temperature or a monomer density.

The water content of the PVDF-based resin particles is preferably from 35 to 80 mass%. This water content is a water content of the PVDF-based resin particles in the case where a pressure of 0.5 MPa is applied to the PVDF-based resin particles in water. When the water content is too high, drying of the PVDF-based resin particles requires a larger amount of energy. When the water content is too low, in the case where a filler component is filled in the PVDF-based resin particles, the filled amount may be insufficient relative to the expected amount. From the perspective of enabling the adequate amount of filler component to be filled in the PVDF-based resin particles, the water content is more preferably 35 mass% or greater, and even more preferably 40% or greater. Furthermore, from the perspective of enhancing efficiency of drying, the water content is more preferably 80 mass% or less, and even more preferably 60 mass% or less.

The water content of the PVDF-based resin particles is expressed by the following equation when a weight of the PVDF-based resin particles after a pressure of 0.5 MPa is applied to an aqueous dispersion of the PVDF-based resin particles is W1, and a dry-weight of the PVDF-based resin particles is W2. The water content of the PVDF-based resin particles can be made higher by making the pore size larger or the total pore volume described below larger.

$$\text{Water content (\%)} = \{(W1 - W2)/W2\} \times 100$$

Note that the pressure to be applied to the PVDF-based resin particles during measurement of the water content (0.5 MPa) can be appropriately selected from the perspective of preventing excessive permeation of water into the PVDF-based resin particles that exceeds a substantially moisture state, from the perspective of preventing disintegration of the PVDF-based resin particles due to application of pressure, and from the perspective of operability of pressure application. The perspective of operability of pressure application is, for example, a perspective of being capable of increasing pressure in a short period of time or a perspective of being capable of applying pressure to the PVDF-based resin particles by using a vessel having appropriate pressure resistance that does not correspond to a highpressure equipment.

The total pore volume of the PVDF-based resin particles is preferably from 0.6 to 1.3 mL/g. The total pore volume is measured by a mercury porosimeter. The measurement range is from 3 to 1000 nm. When the total pore volume of the PVDF-based resin particles is too small, an adequate amount of a filler component may not be filled, and when the total pore volume is too large, the water content may be too high. From the perspective of enabling the adequate amount of filler component to be filled in the PVDF-based resin particles, the total pore volume of the PVDF-based resin particles is more preferably 0.8 mL/g or greater, and even more preferably 0.9 mL/g or greater. Furthermore, from the perspective of enhancing efficiency of drying, the total pore volume of the PVDF-based resin particles is more preferably 1.2 mL/g or less, and even more preferably 1.1 mL/g or less.

The porous structure of the PVDF-based resin particles can be, for example, appropriately selected depending on the type of a filler component to be filled or an expected filling amount. For example, in the case where a filler component is a water-soluble compound described below, such as polyacrylic acid, the total pore volume measured by a mercury porosimeter from 0.9 to 1.3 mL/g and the pore size that makes the cumulative pore volume measured by a mercury porosimeter 0.5 mL/g from 100 to 300 nm are preferred from the perspective of filling an adequate amount of a filler component and from the perspective of efficiently drying the PVDF-based resin particles to which such a filler component is filled.

The size of the PVDF-based resin particles can be appropriately selected depending on the use. For example, for use in an ordinary resin material, the average particle size of the PVDF-based resin particles may be from 50 to 300 μm. The average particle size can be measured by a known method. Furthermore, for example, the average particle size can be adjusted by intensity of agitation in a production method of the PVDF-based resin particles by suspension polymerization.

Other component

The PVDF-based resin particles may further contain other components besides the vinylidene fluoride polymer as long as effects of the present embodiment can be provided. One type of such other components may be used, or two or more types may be used.

Filler component

The PVDF-based resin particles may further contain a filler component that is filled in its pore. The filler component can be appropriately selected from known compounds and compositions in a range that can be filled in the pore. One type of the filler components may be used, or two or more types may be used.

When the filler component is a water-soluble component, an adequate amount of the filler component can be filled in the PVDF resin-based particles by applying pressure to the PVDF resin-based particles before drying in an aqueous solution of the filler component. Therefore, the filler component is preferably water soluble from the perspective of efficiently filling into the PVDF resin-based particles.

Examples of the filler component include polyacrylic acid and polyvinylpyrrolidone. Examples of the polyacrylic acid include homopolymers of acrylic acid and copolymers of acrylic acid and another monomer. The content of the structural unit derived from acrylic acid in the polyacrylic acid is typically 60 wt.% or greater, preferably 75 wt.% or greater, and more preferably 90 wt.% or greater. The polyacrylic acid is preferably a homopolymer of acrylic acid.

As another monomer besides the acrylic acid, a monomer that is copolymerizable with acrylic acid can be used. Examples of such another monomer include methacrylic acid, $\alpha$-olefins, alkyl acrylates, alkyl methacrylates, alkyl methacrylates, vinyl acetate, and aromatic vinyl compounds, such as styrene.

Examples of the $\alpha$-olefin include ethylene, propylene, and 1-butene. Examples of the alkyl acrylate include methyl acrylate and ethyl acrylate. Examples of the alkyl methacrylate include methyl methacrylate and ethyl methacrylate.

The content of the filler component in the PVDF resin-based particles can be determined by using a known instrumental analysis and detecting a moiety or properties peculiar to the filler component. For example, when the filler component is polyacrylic acid, determination by infrared spectroscopic analysis (IR) is possible.

In more details, as described in WO 2012/090876, IR spectrum of a press sheet of the PVDF resin-based particles is measured in a range from 1500 cm$^{-1}$ to 4000 cm$^{-1}$ by, for example, using an infrared spectroscope FT-730 (available from Horiba, Ltd.), and the content can be determined based on the following equation.

$AR = A_{1700\text{-}1800}/A_{3023}$

In the equation above, "$A_{1700\text{-}1800}$" is absorbance originating from stretching vibration of carbonyl groups detected in the range from 1700 to 1800 cm$^{-1}$, and "$A_{3023}$" is absorbance originating from stretching vibration of CH detected near 3023 cm$^{-1}$ (e.g., 3000 cm$^{-1}$ to 3050 cm$^{-1}$). By subtracting the absorbance ratio $A_{R1}$ of the PVDF resin-based particles before impregnation of the polyacrylic acid aqueous solution from the absorbance ratio $A_{R2}$ after the impregnation, a measure of the content of the polyacrylic acid in the PVDF resin-based particles can be obtained. Alternatively, the amount of the polyacrylic acid in the PVDF resin-based particles may be determined based on correlation between the amount of the polyacrylic acid in the PVDF resin-based particles and the absorbance ratio determined in advance.

The content of the filler component in the PVDF resin-based particles can be adjusted by a concentration of the filler component in the aqueous solution of the filler component and can be increased by repeatedly dispersing and applying pressure to the PVDF resin-based particles in the aqueous solution.

The PVDF-based resin particles can be produced by the following production method.

Production method of PVDF-based resin particles

The PVDF-based resin particles according to the present embodiment can be produced by using a known production method of PVDF-based resin particles, which subjects a vinylidene fluoride-containing monomer to suspension polymerization in water in a condition that allows vinylidene fluoride to be in a supercritical state, except for a supplied amount of the vinylidene fluoride-containing monomer.

Suspension polymerization step

For example, the PVDF-based resin particles includes a step of subjecting a monomer containing vinylidene fluoride to suspension polymerization in water in a condition that allows vinylidene fluoride to be in a supercritical state. The monomer contains vinylidene fluoride and optionally contains another monomer described above. In the suspension polymerization step, water and a predetermined amount of the monomer are supplied to a reactor. The "predetermined amount" is an amount that makes a density of the monomer at a polymerization initial temperature of the suspension polymerization to be, for example, from 0.580 g/mL to 0.660 g/mL, to prevent the molecular structure of the PVDF-based resin particle from being excessively minute.

The polymerization initial temperature is a temperature set as an initial temperature for the suspension polymerization. When the suspension polymerization is allowed to proceed at a constant polymerization temperature, the polymerization initial temperature is the constant polymerization temperature. When the polymerization temperature of the suspension polymerization is changed multi-stepwisely (e.g., increasing), the polymerization initial temperature is a temperature at the first step among the multi-stepwise polymerization temperatures.

The polymerization initial temperature can be appropriately selected in a range of temperatures that is adequate to allow the vinylidene fluoride in the reactor to be in a supercritical state. When the polymerization initial temperature is too low, the reaction time of the suspension polymerization becomes long, and thus productivity of the PVDF-based resin particles may be low. When the polymerization initial temperature is too high, pressure in the reaction system of the suspension polymerization becomes high, and thus a reactor having an even higher pressure resistance may be required. From the perspective of enhancing productivity of the PVDF-based resin particles, the polymerization initial temperature is preferably 35°C or higher, and more preferably 38°C or higher. Furthermore, from the perspective of suppressing steep rise of pressure in the reaction system, the polymerization initial temperature is preferably 55°C or lower, and more preferably 52°C or lower. The actual temperature in the reactor during the suspension polymerization reaction is typically maintained in a range of $\pm 1°C$ relative to the polymerization initial temperature.

When the supplied amount of the monomer is less than the range described above, the bulk density of the PVDF-based resin particles to be produced may be small. Furthermore, when the supplied amount of the monomer is greater than the range described above, pressure during the suspension polymerization becomes high, and thus more expensive production equipment having an even higher pressure resistance may be required. From the perspectives described above, the supplied amount of the monomer is more preferably 0.600 g/mL or greater and more preferably 0.640 g/mL or less.

The density of the monomer in the polymerization initial temperature is calculated based on the following equation. In the following equation, Dv is a density of the monomer at a polymerization initial temperature (g/mL). Mv is a supplied amount of the monomer (g). Vc is an internal volume of the reactor (mL). Vw is a volume of water in the reactor at the polymerization initial temperature (mL).

$$Dv = Mv/(Vc - Vw)$$

Vc can be determined as a volume of water when water is filled in a reactor, in an actually used condition, equipped with equipment used during the suspension polymerization, such as an agitator. Vc can be measured at normal temperature. Vw can be determined by dividing the supplied amount of water (g) by the density of water at the polymerization initial temperature (g/mL).

The supplied amount of water to the reactor is in a range that can establish the range of the monomer density described above, and can be appropriately selected in a range that can adequately perform the suspension polymerization of the monomer. From this perspective, for example, the supplied amount of water to the reactor is preferably 2.6 times or greater, and more preferably 3.0 times or greater, relative to the supplied amount of the monomer to the reactor. Furthermore, from the perspective described above, the supplied amount of water to the reactor is preferably 4.0 times or less, and more preferably 3.6 times or less, relative to the supplied amount of the monomer to the reactor.

The reactor can be appropriately selected from known reactors in a range that can achieve the condition of the suspension polymerization of the present embodiment. Examples of the reactor include autoclaves.

The pressure in the reactor preferably adequately exceeds the critical pressure of the vinylidene fluoride (4.38 MPa) at the polymerization initial temperature in the suspension polymerization. Typically, the pressure at the polymerization initial temperature becomes the maximum of the pressure in the reaction system in the suspension polymerization reaction. From the perspective of shortening the reaction time, the pressure in the reactor at the polymerization initial temperature is preferably 5 MPa or greater, and more preferably 5.5 MPa or greater. Furthermore, for example, from the perspective of cost reduction for the reactor, the pressure in the reactor at the polymerization initial temperature is preferably 8 MPa or less, and more preferably 7.5 MPa or less. The pressure can be adjusted by various factors, such as supplied amount of the vinylidene fluoride-containing monomer, the polymerization initial temperature, and the monomer density.

Note that, in the production method of the PVDF-based resin particles, optionally, the reaction system may be heated for a plurality of times, and the temperature in the reaction system may be increased for a plurality of times. The temperature in the reaction system during heating in the middle of the polymerization reaction described above may be a temperature higher than the polymerization initial temperature described above and, for example, may be in a range from 50 to 60°C, and further may be in a range from 50 to 80°C. The heating for a plurality of times is preferred from the perspective of suppressing reduction of pressure involved with consumption of the monomer and reduction of reaction rate, and enhancing reaction efficiency.

The end point of the suspension polymerization can be appropriately selected taking balance between reduction of an unreacted monomer amount and extension of polymerization time (i.e. productivity of the product polymer) into consideration. The end point of the suspension polymerization can be decided based on, in addition to sampling of the reaction product, temperature increase in the reaction system and change of pressure involved with the temperature increase.

In the production method of the PVDF-based resin particles, another component besides the water and the monomer described above may be further used in a range that the effect of the present embodiment can be achieved. Examples of such another component include chain transfer agents, polymerization initiators, and suspending agents.

The chain transfer agent is used to adjust the molecular weight of the obtained polymer. One or more types of the chain transfer agents may be used. The chain transfer agent can be appropriately selected from known compounds that can be used to adjust a molecular weight of a vinylidene fluoride polymer. Examples of the chain transfer agent include ethyl acetate, propyl acetate, acetone, and diethyl carbonate. The amount of the chain transfer agent is, for example, 5 parts by mass or less per 100 parts by mass of the monomer.

The polymerization initiator may be of one type or more, and examples of the polymerization initiator include diisopropyl peroxydicarbonate, di-n-propyl peroxydicarbonate, and per-butyl peroxypivalate. The amount of the polymerization initiator is, for example, from 0.001 to 2 parts by mass per 100 parts by mass of the monomer.

A suspending agent is used to enhance dispersion of the monomer in water. The suspending agent may be of one type or more. Examples of the suspending agent include methyl cellulose, hydroxyethyl cellulose, hydroxypropyl cellulose, hydroxypropylmethyl cellulose, partially saponified polyvinyl acetate, and acrylic acid-based polymers. The amount of the suspending agent is, for example, from 0.01 to 2 parts by mass per 100 parts by mass of the monomer.

In the suspension polymerization step, shortening of the polymerization time is possible by enhancing reaction efficiency of the monomer containing vinylidene fluoride. Specifically, the polymerization time from the time at which the temperature reaches the polymerization initial temperature to the completion of the polymerization can be, for example, approximately 20 hours or less and, further, 15 hours or less.

Other step

The production method of the PVDF-based resin particles may further include another step besides the suspension polymerization step described above in a range that the effect of the present embodiment can be achieved. Examples of such another step include a dehydration step, a water washing step, a drying step, and a filling step.

The dehydration step can be performed by a known method that collects and filters and dehydrates resin particles in a water slurry. The water washing step can also be performed by a known method that washes resin particles with water. The drying step can also be performed by a known method that dries PVDF-based resin particles.

Filling step

The filling step is a step of filling a filler component into the PVDF-based resin particles. The filling step can be performed by dispersing the PVDF-based resin particles in the filler component or an aqueous solution of the filler component, and optionally applying pressure to the aqueous solution.

The content of the filler component in the aqueous solution can be appropriately selected in a range by which the filler component is dissolved in water and can be filled in the PVDF-based resin particles (e.g., range by which the viscosity of the aqueous solution becomes not greater than a predetermined viscosity). Furthermore, the pressure applied to the aqueous solution can be appropriately selected in a range by which the filler component can be filled in the PVDF-based resin particles and, for example, is from 0.2 to 5 MPa. The temperature of the aqueous solution in the filling step can be appropriately selected in a range by which the filler component can be filled in the PVDF-based resin particles and, for example, may be at room temperature.

The pore size that makes the cumulative pore volume 0.5 mL/g of the PVDF-based resin particles according to the present embodiment described above significantly affects the water content after the pressurization and the filled amount of the filler component in the PVDF-based resin particles. For example, when 0.5 g of water is contained relative to 1 g of the PVDF-based resin particles, the water content of the PVDF-based resin particles is 50%. In the case where the water content of this degree is set as a set value, generally, water (or the filler component or an aqueous solution thereof) is stored in pores, with a pore size having 0.5 mL/g cumulative pore volume, of the porous structure of the PVDF-based resin particles.

However, when the pore is too small, water can be impregnated but a large filler component, such as a water-soluble polymer, cannot be incorporated into the pore. Therefore, the pore size that makes the cumulative pore volume 0.5 mL/g needs to have a certain degree of size.

Furthermore, the water content of the PVDF-based resin particles according to the present embodiment is provided as a numeric value at the time of pressure application of 0.5 MPa. Depending on the filler component, the PVDF-based resin particles, to which the filler component can be efficiently filled at a low pressure of approximately 0.5 MPa, have not been known. For example, the PVDF-based resin particles, to which a polyacrylic acid aqueous solution can be efficiently impregnated at a low pressure of approximately 0.5 MPa, have not been known. Furthermore, when polyacrylic acid-containing PVDF-based resin particles can be produced by applying pressure to the polyacrylic acid aqueous solution into the PVDF-based resin particles to impregnate the PVDF-based resin particles with the polyacrylic acid aqueous solution, most of the water can be removed by simple operation, such as filtration. Therefore, the energy needed to dry water can be suppressed to a minimum energy.

Furthermore, examples of the method of impregnating the PVDF-based resin particles with the polyacrylic acid aqueous solution is a method of applying pressure to the PVDF-based resin particles using an inert gas, such as a nitrogen gas, and a method of mixing an organic solvent, such as alcohol, into aqueous dispersion medium of the PVDF-based resin particles. In the latter case using an organic solvent, for example, special equipment, such as a drier having an explosionproof structure and recovery equipment for the organic solvent, is required, and production cost of the PVDF-based resin particles containing the filler component tends to be high. In the former case where pressure is applied by a gas, such as a nitrogen gas, special equipment, such as a pressure-resistant vessel, is required when pressure of the gas becomes high, and production cost of the PVDF-based resin particles containing the filler component tends to be high. Therefore, capability of impregnating the PVDF-based resin particles with the filler component at a low pressure is preferred.

Summary

As is clear from the description above, the PVDF-based resin particle according to the present embodiment is a particle of a vinylidene fluoride polymer, the particle having a bulk density from 0.30 to 0.44 g/mL and a pore size that makes a cumulative pore volume measured by a mercury porosimeter 0.5 mL/g from 50 to 400 nm. Therefore, the PVDF-based resin particles according to the present embodiment can be efficiently dehydrated, and a filler component can be efficiently filled.

In the PVDF-based resin particles according to the present embodiment, the water content when a pressure of 0.5 MPa is applied in water being from 35 to 80 mass% is further effective from the perspectives of efficiently drying the PVDF-based resin particles and allowing the filler component to be contained in an adequate amount in the PVDF-based resin particles.

Furthermore, in the PVDF-based resin particles according to the present embodiment, the total pore volume measured by a mercury porosimeter being from 0.6 to 1.3 mL/g is further effective from the perspectives of efficiently drying the PVDF-based resin particles and allowing the filler component to be contained in an adequate amount in the PVDF-based resin particles.

Furthermore, the vinylidene fluoride polymer in the PVDF-based resin particles according to the present embodiment being a copolymer of vinylidene fluoride and another monomer is further effective from the perspective of controlling the porous structure of the PVDF-based resin particles to be an expected structure.

Furthermore, in the PVDF-based resin particles according to the present embodiment, such another monomer in the copolymer described above being one or more compounds selected from the group consisting of hexafluoropropylene and monomethyl maleate is further effective from the perspective of allowing the vinylidene fluoride polymer to exhibit suitable adhesion as a binder for an electrode.

Furthermore, in the PVDF-based resin particles according to the present embodiment, the total pore volume measured by a mercury porosimeter being from 0.9 to 1.3 mL/g and the pore size that makes the cumulative pore volume measured by a mercury porosimeter 0.5 mL/g being from 100 to 300 nm are further effective from the perspective of filling an adequate amount of a filler component of the water-soluble compound and from the perspective of efficiently drying the PVDF-based resin particles to which such a filler component is filled.

Furthermore, in the PVDF-based resin particles according to the present embodiment, the vinylidene fluoride polymer may be a homopolymer of vinylidene fluoride.

Furthermore, the bulk density of the PVDF-based resin particles according to the present embodiment being from 0.33 to 0.38 g/mL is further effective from the perspective of enhancing efficiency in drying the PVDF-based resin particles and from the perspectives of allowing the filler component to be contained in an adequate amount in the PVDF-based resin particles.

Furthermore, the average particle size of the PVDF-based resin particles according to the present embodiment may be from 50 to 300 μm.

Furthermore, the PVDF-based resin particles according to the present embodiment may further contain a filler component that is filled in its pore, and the filler component may be polyacrylic acid.

The present invention is not limited to the above-described embodiments, and various modifications can be made within the scope of the claims, and embodiments obtained by appropriately combining technical means disclosed in different embodiments are also included in the technical scope of the present invention.

Examples

Measurement method of physical properties

The determination method of the physical property values in the examples below will be described prior to the detailed description of the examples.

(1) Inherent viscosity of PVDF-based resin particles

The inherent viscosity of the PVDF-based resin of the PVDF-based resin particles was determined from the following method. First, 4 g of PVDF-based resin particles were added to 1 L of N,N-dimethylformamide and dissolved at 80°C over 8 hours, and the obtained solution was maintained at 30°C, and the logarithmic viscosity measured by a Ubbelohde viscometer was used.

(2) Bulk density of PVDF-based resin particles

The bulk density of the PVDF-based resin particles was measured based on the measurement method of "Bulk specific gravity" described in JIS K6721-3.3. Specifically, 2 mL of 5% ethanol solution of a surfactant was added to 100 g of a sample of the PVDF-based resin particles, adequately stirred by a spatula, and then left to stand still for 10 minutes. After 120 mL of the sample, which had undergone prevention of static charge as described above, was placed in a funnel to which a damper of the bulk specific gravity measurement device was inserted, the damper was quickly pulled out to let the sample dropped onto a receiver. The sample protruded from the receiver was scraped with a glass rod, and then the mass of the receiver containing the sample was accurately weighed to 0.1 g, and the bulk density was calculated by the following equation.

$$S = (C - A)/B$$

S: Bulk density (g/mL)
A: Mass of receiver (g)
B: Internal volume of receiver (mL)
C: Mass of receiver containing sample (g)

(3) Average particle size of PVDF-based resin particles

The particle distribution of the PVDF-based resin particles was measured by a dry sieving method in accordance with JIS K 0069-3.1 by using Low Tap II-type Sieve Shaker D-type, available from Heiko Seisakusho K.K. The average particle size was determined by a log-normal distribution method based on the measurement result of the particle distribution. The average particle size was a particle size showing 50% cumulative value (D50) in the particle size cumulative distribution.

(4) Cumulative pore volume of PVDF-based resin particles and pore size of 0.5 mL/g cumulative pore volume

After from 0.1 to 0.4 g of the sample of the PVDF-based resin particles was dried at a temperature of 105 $\pm$ 2°C for 4 hours, the pore distribution of the pore size from 3 to 1000 nm was measured in accordance with the mercury intrusion porosimetry of JIS R 1655 by using Autopore 9520 (available from Shimadzu Corporation) and a cell for powder having a cell volume of 5 mL. Then, the cumulative pore volume was determined as a cumulative value of the pore volume from a side of a greater pore size in the pore radius described above. Furthermore, the pore size at which the cumulative pore volume was 0.5 mL/g in the pore distribution was determined.

(5) Water content of filler particles

The water content of the filler particles is a proportion of a weight of the filler particles after drying relative to weight reduction by drying when the filler particles after filtration and before drying was dried at 80°C for 20 hours and a weight of the filler particles before the drying was taken as W1 and a weight after the drying was taken as W2, and is determined by the following equation.

$$\text{Water content of filler particles (\%)} = \{(W1 - W2)/W2\} \times 100$$

(6) Absorbance ratio of filler particles

A press sheet having a 30 mm × 30 mm size was prepared by heat-pressing each of PVDF resin-based particles before and after the pressurization (filling) at 200°C. The IR spectra of the press sheet was measured in a range of 1500 $cm^{-1}$ to 4000 $cm^{-1}$ by using an infrared spectrophotometer FT-730 (available from Horiba, Ltd.). Then, the absorbance ratio $A_R$ before and after the pressurization was determined by the following equation.

$$AR = A_{1700-1800}/A_{3023}$$

In the equation above, "$A_{1700-1800}$" is absorbance originating from stretching vibration of carbonyl groups detected in the range from 1700 to 1800 $cm^{-1}$, and "$A_{3023}$" is absorbance originating from stretching vibration of CH detected near 3023 $cm^{-1}$ (e.g., 3000 $cm^{-1}$ to 3050 $cm^{-1}$). By subtracting $A_R$ before the filling from the $A_R$ after the filling, the amount of change of the absorbance ratio due to the filled polyacrylic acid is determined. This amount of change can be taken as a measure of the content of the polyacrylic acid in the filler particles, and can be converted into the amount of the polyacrylic acid.

Example 1

In an autoclave having an internal volume of 1940 mL, the following components were charged in the amounts described below.

Ion-exchanged water: 1280 g
Methyl cellulose: 0.6 g
Ethyl acetate: 4.0 g
Diisopropyl peroxydicarbonate: 2.2 g
Vinylidene fluoride (VDF): 396 g
Monomethyl maleate (MMM): 4.0 g

The methyl cellulose was a suspending agent. The ethyl acetate was a chain transfer agent. The diisopropyl peroxydicarbonate was a polymerization initiator. Furthermore, the charged amount of the ion-exchanged water was 3.20 times the total charged amount of the VDF and the MMM.
The density of the vinylidene fluoride-containing monomer in the present example was 0.618 g/mL, which was adequately high. The volume of the vinylidene fluoride-containing monomer calculated from this value was 647 mL. Note that the density of the vinylidene fluoride-containing monomer was calculated by the following equation, taking the density of water at 45°C to be 0.9902 g/mL.

$$Dv = Mv/(Vc - Vw)$$

Dv: Density of vinylidene fluoride-containing monomer at polymerization initial temperature (g/mL)
Mv: Supplied amount of vinylidene fluoride-containing monomer (g)
Vc: Internal volume of reactor (autoclave) (mL)
Vw: Volume of water in reactor at polymerization initial temperature (mL) (= supplied mass of water (g)/density of water (g/mL))

Then, the temperature in the autoclave was increased to 45°C over 1.5 hours and maintained at 45°C for 9.2 hours. The maximum reached pressure during this time was 7.1 MPa. Furthermore, the pressure in the autoclave at 9.2 hours after the completion of the temperature increase to 45°C was 1.2 MPa.
Next, the obtained polymer slurry was dehydrated, washed with water, and dried at 80°C for 20 hours, and thus PVDF-based resin particles 1 were obtained. The PVDF-based resin particles 1 were powder of a copolymer of vinylidene fluoride and monomethyl maleate. The yield of the PVDF-based resin particles 1 was 94.0%. Furthermore, the inherent viscosity of the PVDF-based resin particles 1 was 1.1 dL/g.

Furthermore, the bulk density of the PVDF-based resin particles 1 was 0.346 g/mL. The average particle size of the PVDF-based resin particles 1 was 140 $\mu$m. The cumulative pore volume of the PVDF-based resin particles 1 was 1.08 mL/g. The pore size that makes the cumulative pore volume 0.5 mL/g of the PVDF-based resin particles 1 was 186 nm.

Then, 2 g of the dried PVDF-based resin particles 1 was placed in an ordinary vessel for agitation, and 50 g of a 5 mass% polyacrylic acid aqueous solution was added to the vessel and adequately agitated. Then, the obtained dispersion was agitated for 2 minutes while a pressure of 0.5 MPa was applied to the dispersion by using a nitrogen gas. Next, the pressure applied to the dispersion was returned to ambient pressure by purging the nitrogen gas from the vessel for agitation. The slurry in the dispersion was then subjected to suction filtration, and the obtained filler particles 1 were dried in an oven at 80°C for 20 hours.

The water content of the filler particles 1 was 54%. Furthermore, the absorbance ratio before the pressurization of the filler particles 1 was 0.435, the absorbance ratio after the pressurization was 0.526, and the difference between the absorbance ratio before the pressurization and the absorbance ratio after the pressurization was 0.091.

Example 2

In an autoclave having an internal volume of 1940 mL, the following components were charged in the amounts described below.

Ion-exchanged water: 1230 g
Methyl cellulose: 0.2 g
Ethyl acetate: 13 g
Diisopropyl peroxydicarbonate: 0.86 g
VDF: 430 g

The PVDF-based resin particles 2 were produced in the same manner as in Example 1 except for changing the polymerization initial temperature to 40°C and the time for maintaining this polymerization initial temperature to 13.5 hours, and also the filler particles 2 were produced. The PVDF-based resin particles 2 were powder of a homopolymer of vinylidene fluoride.

The maximum reached pressure while 13.5 hours had passed from the polymerization initial temperature was 6.0 MPa. Furthermore, the density of the vinylidene fluoride-containing monomer in the present example was 0.614 g/mL, which was adequately high. The volume of the vinylidene fluoride-containing monomer calculated from this value was 700 mL. Note that the density of the vinylidene fluoride-containing monomer was calculated, taking the density of water at 40°C to be 0.9922 g/mL.

The yield of the PVDF-based resin particles 2 was 94%, and the inherent viscosity was 1.0 dL/g. Furthermore, the bulk density of the PVDF-based resin particles 2 was 0.351 g/mL, the average particle size was 160 $\mu$m, the cumulative pore volume was 1.03 mL/g, and the pore size that made the cumulative pore volume 0.5 mL/g was 243 nm.

Furthermore, the water content of the filler particles 2 was 80%. Furthermore, the absorbance ratio before the pressurization of the filler particles 2 was 0.071, the absorbance ratio after the pressurization was 0.265, and the difference between the absorbance ratio before the pressurization and the absorbance ratio after the pressurization was 0.194.

Comparative Example 1

In an autoclave having an internal volume of 1940 mL, the following components were charged in the amounts described below.

Ion-exchanged water: 1090 g
Methyl cellulose: 0.64 g
Ethyl acetate: 2.1 g
Diisopropyl peroxydicarbonate: 4.2 g
VDF: 420 g
MMM: 4.2 g

The PVDF-based resin particles 3 were produced in the same manner as in Example 1 except for changing the polymerization initial temperature to 29°C and the time for maintaining this polymerization initial temperature to 40 hours, and also the filler particles 3 were produced.

The maximum reached pressure while 40 hours had passed from the polymerization initial temperature was 4.2 MPa. Note that the density of the vinylidene fluoride-containing monomer in this comparative example was calculated in the same manner as in Example 1, taking the density of water at 29°C to be 0.9959 g/cm$^3$, and the density was 0.502 g/cm$^3$, which was low. Furthermore, the volume of the vinylidene fluoride-containing monomer calculated from this value was 845 cm$^3$. Furthermore, at the temperature and the pressure described above, vinylidene fluoride was not in a supercritical state, and the density of the vinylidene fluoride-containing monomer determined from a literature value was 0.49 g/cm$^3$.

The yield of the PVDF-based resin particles 3 was 91%, and the inherent viscosity was 1.1 dL/g. Furthermore, the bulk density of the PVDF-based resin particles 3 was 0.350 g/mL, the average particle size was 180 μm, the cumulative pore volume was 0.77 mL/g, and the pore size that made the cumulative pore volume 0.5 mL/g was 37 nm.

Furthermore, the water content of the filler particles 3 was 44%. Furthermore, the absorbance ratio before the pressurization of the filler particles 3 was 0.460, the absorbance ratio after the pressurization was 0.480, and the difference between the absorbance ratio before the pressurization and the absorbance ratio after the pressurization was 0.020.

Comparative Example 2

In an autoclave having an internal volume of 1940 mL, the following components were charged in the amounts described below.

Ion-exchanged water: 1024 g
Methyl cellulose: 0.6 g
Ethyl acetate: 1.2 g
Diisopropyl peroxydicarbonate: 1.8 g
VDF: 396 g
MMM: 4.0 g

The PVDF-based resin particles 4 were produced in the same manner as in Example 1 except for changing the polymerization initial temperature to 50°C and the time for maintaining this polymerization initial temperature to 6.3 hours, and also the filler particles 4 were produced.

The maximum reached pressure while 6.3 hours had passed from the polymerization initial temperature was 7.0 MPa. Furthermore, the density of the vinylidene fluoride-containing monomer in the present comparative example was 0.442 g/mL, which was low. The volume of the vinylidene fluoride-containing monomer calculated from this value was 904 mL. Note that the density of the vinylidene fluoride-containing monomer was calculated, taking the density of water at 50°C to be 0.9881 g/mL.

The yield of the PVDF-based resin particles 4 was 92%, and the inherent viscosity was 1.2 dL/g. Furthermore, the bulk density of the PVDF-based resin particles 4 was 0.297 g/mL, the average particle size was 210 μm, the cumulative pore volume was 1.43 mL/g, and the pore size that made the cumulative pore volume 0.5 mL/g was 415 nm.

Furthermore, the water content of the filler particles 4 was 99%. Furthermore, the absorbance ratio before the pressurization of the filler particles 4 was 0.436, the absorbance ratio after the pressurization was 0.547, and the difference between the absorbance ratio before the pressurization and the absorbance ratio after the pressurization was 0.111.

Comparative Example 3

The PVDF-based resin particles 5 were produced in the same manner as in Example 1 except for charging the monomer to an autoclave dividedly in two times, and also the filler particles 5 were produced.

First, in an autoclave having an internal volume of 1940 mL, the following components were charged in the amounts described below.

Ion-exchanged water: 1024 g
Methyl cellulose: 0.6 g
Ethyl acetate: 4.8 g
Diisopropyl peroxydicarbonate: 2.0 g
VDF: 396 g
MMM: 4.0 g

Then, the temperature in the autoclave was increased to 50°C over 2 hours and maintained at 50°C. At this time period, the maximum reached pressure was 7.0 MPa. After approximately 1 hour since the temperature had been increased to 50°C, at the time at which the pressure in the autoclave became 6.7 MPa, 200 g of the VDF was gradually added as the rest of the monomers in a manner that the pressure was maintained from 6.69 to 6.71 MPa. After second addition of the monomer, the temperature in the autoclave was maintained at 50°C for approximately 3 hours, and further maintained until the pressure decreased to 2.0 MPa. The total time at which the temperature in the autoclave was maintained at 50°C was 6.9 hours.

The density of the vinylidene fluoride-containing monomer in the present comparative example was 0.442 g/mL, which was low. The volume of the vinylidene fluoride-containing monomer calculated from this value was 904 mL. Note that the density of the vinylidene fluoride-containing monomer was calculated, taking the density of water at 50°C to be 0.9881 g/mL.

The yield of the PVDF-based resin particles 5 was 96%, and the inherent viscosity was 1.2 dL/g. Furthermore, the bulk density of the PVDF-based resin particles 5 was 0.459 g/mL, the average particle size was 175 $\mu$m, the cumulative pore volume was 0.70 mL/g, and the pore size that made the cumulative pore volume 0.5 mL/g was 75 nm.

Furthermore, the water content of the filler particles 5 was 25%. Furthermore, the absorbance ratio before the pressurization of the filler particles 5 was 0.313, the absorbance ratio after the pressurization was 0.329, and the difference between the absorbance ratio before the pressurization and the absorbance ratio after the pressurization was 0.016.

Comparative Example 4

In an autoclave having an internal volume of 1940 mL, the following components were charged in the amounts described below.

Ion-exchanged water: 1100 g
Methyl cellulose: 0.22 g
Ethyl acetate: 6.0 g
Diisopropyl peroxydicarbonate: 2.6 g
VDF: 430 g

The PVDF-based resin particles 6 were produced in the same manner as in Example 2 except for changing the polymerization initial temperature to 26°C and the time for maintaining this polymerization initial temperature to 26 hours, and also the filler particles 6 were produced.

The maximum reached pressure while 26 hours had passed from the polymerization initial temperature was 4.0 MPa. Note that the density of the vinylidene fluoride-containing monomer in this comparative example was calculated in the same manner as in Example 1, taking the density of water at 26°C to be 0.9968 g/cm$^3$, and the density was 0.514 g/cm$^3$, which was low. Furthermore, the volume of the vinylidene fluoride-containing monomer calculated from this value was 836 cm$^3$. Furthermore, at the temperature and the pressure described above, vinylidene fluoride was not in a supercritical state, and the density of the vinylidene fluoride-containing monomer determined from a literature value was 0.57 g/cm$^3$.

The yield of the PVDF-based resin particles 6 was 90%, and the inherent viscosity was 1.0 dL/g. Furthermore, the bulk density of the PVDF-based resin particles 6 was 0.445 g/mL, the average particle size was 170 $\mu$m, the cumulative pore volume was 0.650 mL/g, and the pore size that made the cumulative pore volume 0.5 mL/g was 78 nm.

Furthermore, the water content of the filler particles 6 was 31%. Furthermore, the absorbance ratio before the pressurization of the filler particles 6 was 0.095, the absorbance ratio after the pressurization was 0.143, and the difference between the absorbance ratio before the pressurization and the absorbance ratio after the pressurization was 0.043.

Comparative Example 5

The PVDF-based resin particles 7 were produced in the same manner as in Example 2 except for charging the monomer to an autoclave dividedly in two times, and also the filler particles 7 were produced.

First, in an autoclave having an internal volume of 1940 mL, the following components were charged in the amounts described below.

Ion-exchanged water: 1024 g
Methyl cellulose: 0.20 g
Ethyl acetate: 10 g
Diisopropyl peroxydicarbonate: 0.4 g
VDF: 400 g

Then, the temperature in the autoclave was increased to 55°C over 2 hours and maintained at 55°C. At this time period, the maximum reached pressure was 6.9 MPa. After approximately 2 hours since the temperature had been increased to 55°C, at the time when the pressure in the autoclave became 6.6 MPa, 400 g of the VDF was gradually added as the rest of the monomer in a manner that the pressure was maintained from 6.59 to 6.61 MPa. After second addition of the monomer, the temperature in the autoclave was maintained at 55°C for approximately 10 hours, and further maintained until the pressure decreased to 2.5 MPa. The total time at which the temperature in the autoclave was maintained at 55°C was 25 hours.

The density of the vinylidene fluoride-containing monomer in the present comparative example was 0.444 g/mL, which was low. The volume of the vinylidene fluoride-containing monomer calculated from this value was 901 mL. Note that the density of the vinylidene fluoride-containing monomer was calculated, taking the density of water at 55°C to be 0.9857 g/mL. Furthermore, the yield of the PVDF-based resin particles 7 was 95%. Furthermore, the inherent viscosity of the PVDF-based resin particles 7 was 1.0 dL/g.

The bulk density of the PVDF-based resin particles 7 was 0.606 g/mL, the average particle size was 155 $\mu$m, the cumulative pore volume was 0.38 mL/g, and the pore size that made the cumulative pore volume 0.5 mL/g was 3 nm or less.

Furthermore, the water content of the filler particles 7 was 17%. Furthermore, the absorbance ratio before the pressurization of the filler particles 7 was 0.100, the absorbance ratio after the pressurization was 0.127, and the difference between the absorbance ratio before the pressurization and the absorbance ratio after the pressurization was 0.027.

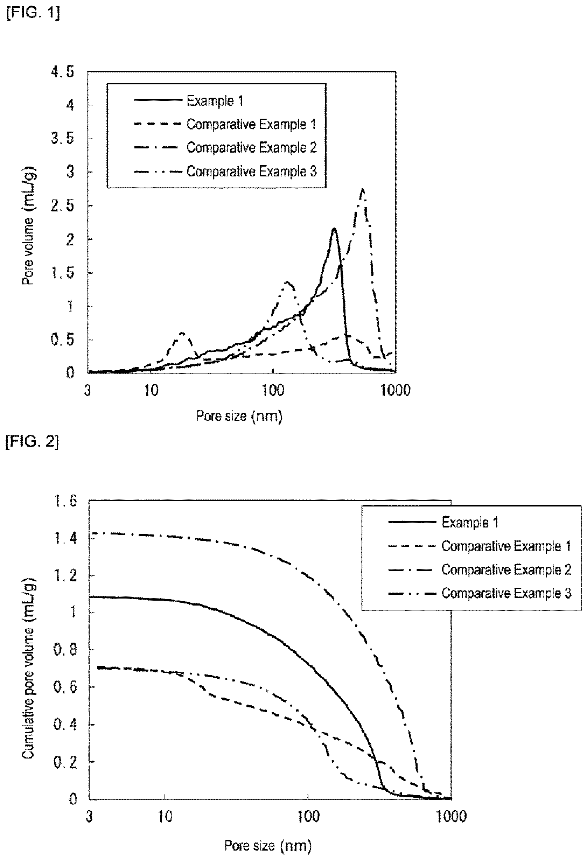

The results are shown in Table 1. Furthermore, the pore sizes and the volumes of the PVDF-based resin particles of Example 1 and Comparative Examples 1 to 3 are shown in FIG. 1. Furthermore, the cumulative pore volumes of the PVDF-based resin particles of Example 1 and Comparative Examples 1 to 3 are shown in FIG. 2.

Table 1

| | | Example 1 | Example 2 | Comparative Example 1 | Comparative Example 2 | Comparative Example 3 | Comparative Example 4 | Comparative Example 5 |
|---|---|---|---|---|---|---|---|---|
| Polymerization temperature | (°C) | 45 | 40 | 29 | 50 | 50 | 26 | 55 |
| Monomer density | | High | High | Low | Low | Low | Low | Low |
| Post Addition | | Not performed | Not performed | Not performed | Not performed | Performed | Not performed | Performed |
| Bulk density | (g/mL) | 0.346 | 0.351 | 0.35 | 0.297 | 0.459 | 0.445 | 0.606 |
| Average particle size | (μm) | 140 | 160 | 180 | 210 | 175 | 170 | 155 |
| Cumulative pore volume | (mL/g) | 1.08 | 1.03 | 0.77 | 1.43 | 0.70 | 0.65 | 0.38 |
| Pore size of 0.5 mL/g pore volume | (nm) | 186 | 243 | 37 | 415 | 75 | 78 | ≤ 3 |
| Water content after pressurization | (%) | 54 | 80 | 44 | 99 | 25 | 31 | 17 |
| Absorbance ratio (-) | Before heating | 0.435 | 0.071 | 0.460 | 0.436 | 0.313 | 0.095 | 0.100 |
| | After pressurization | 0.526 | 0.265 | 0.480 | 0.547 | 0.329 | 0.143 | 0.127 |
| | Amount of change | 0.091 | 0.194 | 0.020 | 0.111 | 0.016 | 0.043 | 0.027 |

Observations

As is clear from Table 1, the PVDF-based resin particles of Examples 1 and 2 each had the proper bulk density and pore size at the cumulative pore volume of 0.5 mL/g. Thus, by the pressurization in the polyacrylic acid aqueous solution, adequate amount of the polyacrylic acid was contained, and adequate drying was performed by the drying conditions described above.

In contrast, the PVDF-based resin particles of Comparative Example 1 had the proper bulk density but had a small pore size at the cumulative pore volume of 0.5 mL/g. Therefore, with the pressurization in the polyacrylic acid aqueous solution, the content of the polyacrylic acid was insufficient.

Furthermore, the PVDF-based resin particles of Comparative Example 2 had a low bulk density and a large pore size at the cumulative pore volume of 0.5 mL/g. Thus, the water content was high, and a longer drying time was required for the drying in the temperature conditions described above.

Furthermore, the PVDF-based resin particles of Comparative Example 3 had the proper pore size at the cumulative pore volume of 0.5 mL/g but had a high bulk density. Therefore, there were less space for the polyacrylic acid to permeate, and the content of the polyacrylic acid was insufficient.

Furthermore, the PVDF-based resin particles of Comparative Example 4 had the proper pore size at the cumulative pore volume of 0.5 mL/g but had a high bulk density. Therefore, there were less space for the polyacrylic acid to permeate, and the content of the polyacrylic acid was insufficient.

Furthermore, the PVDF-based resin particles of Comparative Example 5 had a high bulk density and a small pore size at the cumulative pore volume of 0.5 mL/g. Therefore, there were less space for the polyacrylic acid to be filled, and the content of the polyacrylic acid was insufficient.

**INDUSTRIAL APPLICABILITY**

The present invention can be suitably utilized for PVDF-based resin particles containing another component, and further improvements are expected for new usage or known usage of PVDF-based resin compositions, such as coatings and adhesives.

**Claims**

1. A particle of a vinylidene fluoride polymer, the particle having
   a bulk density from 0.30 to 0.44 g/mL, and
   a pore size that makes a cumulative pore volume measured by a mercury porosimeter 0.5 mL/g from 50 to 400 nm.

2. The particle according to claim 1, wherein a water content when a pressure of 0.5 MPa is applied in water is from 35 to 80 mass%.

3. The particle according to claim 1 or 2, wherein a total pore volume measured by a mercury porosimeter is from 0.6 to 1.3 mL/g.

4. The particle according to any one of claims 1 to 3, wherein the vinylidene fluoride polymer is a copolymer of vinylidene fluoride and another monomer.

5. The particle according to claim 4, wherein the another monomer is one or more compounds selected from the group consisting of hexafluoropropylene and monomethyl maleate.

6. The particle according to claim 4 or 5, wherein the total pore volume measured by a mercury porosimeter is from 0.9 to 1.3 mL/g, and the pore size that makes the cumulative pore volume measured by a mercury porosimeter 0.5 mL/g is from 100 to 300 nm.

7. The particle according to any one of claims 1 to 3, wherein the vinylidene fluoride polymer is a homopolymer of vinylidene fluoride.

8. The particle according to any one of claims 1 to 7, wherein the bulk density is from 0.33 to 0.38 g/mL.

9. The particle according to any one of claims 1 to 8, wherein an average particle size is from 50 to 300 $\mu$m.

**10.** The particle according to any one of claims 1 to 9, further comprising a filler component filled in a pore of the particle.

**11.** The particle according to claim 10, wherein the filler component is polyacrylic acid.

[FIG. 1]

[FIG. 2]

## INTERNATIONAL SEARCH REPORT

International application No.

PCT/JP2018/044847

### A. CLASSIFICATION OF SUBJECT MATTER
Int. Cl. C08F14/22(2006.01)i, C08L27/16(2006.01)i, C08L33/02(2006.01)i

According to International Patent Classification (IPC) or to both national classification and IPC

### B. FIELDS SEARCHED

Minimum documentation searched (classification system followed by classification symbols)
Int. Cl. C08F14/22, C08L27/16, C08L33/02

Documentation searched other than minimum documentation to the extent that such documents are included in the fields searched
Published examined utility model applications of Japan      1922-1996
Published unexamined utility model applications of Japan    1971-2019
Registered utility model specifications of Japan            1996-2019
Published registered utility model applications of Japan    1994-2019

Electronic data base consulted during the international search (name of data base and, where practicable, search terms used)
CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| X<br>A | WO 2009/047969 A1 (KUREHA CORP.) 16 April 2009, claims, page 5, line 21-28, comparative examples 1, 5 & US 2010/0270509 A1, claims, paragraph [0022], comparative examples 1, 5 & EP 2196479 A1 & CN 101821298 A | 1-7, 9<br>8, 10-11 |
| A | JP 2012-201866 A (KUREHA CORP.) 22 October 2012, description & CN 102718915 A | 1-11 |
| A | WO 2006/043609 A1 (KUREHA CORP.) 27 April 2006, description & US 2007/0290407 A1, description & EP 1803749 A1 & CN 101044173 A | 1-11 |

☒ Further documents are listed in the continuation of Box C.　　☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04.02.2019 | 12.02.2019 |

| Name and mailing address of the ISA/<br>　　Japan Patent Office<br>　　3-4-3, Kasumigaseki, Chiyoda-ku,<br>　　Tokyo 100-8915, Japan | Authorized officer<br><br>Telephone No. |
|---|---|

Form PCT/ISA/210 (second sheet) (January 2015)

**INTERNATIONAL SEARCH REPORT**

| International application No. |
| --- |
| PCT/JP2018/044847 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | WO 2011/122261 A1 (KUREHA CORP.) 06 October 2011, description & CN 102725889 A & KR 10-2012-0104322 A & TW 201140924 A | 1-11 |
| P, A | JP 2018-172596 A (KUREHA CORP.) 08 November 2018, description (Family: none) | 1-11 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011122261 A
- WO 2009047969 A
- WO 2012090876 A